# EUROPÄISCHE PATENTSCHRIFT

(11) **EP 3 932 176 B1**
(45) Veröffentlichungstag und Bekanntmachung des Hinweises auf die Patenterteilung: **11.01.2023**
(21) Anmeldenummer: 21180876.1
(22) Anmeldetag: 22.06.2021
(51) Int. Cl.: A01D 80/02, A01D 89/00, E01H 15/00

(54) **TROMMEL FÜR EINE AUFNAHMEVORRICHTUNG**
DRUM FOR A PICK-UP DEVICE
TAMBOUR POUR UN DISPOSITIF DE RÉCEPTION

(30) Priorität: 29.06.2020 DE 102020117038
(43) Veröffentlichungstag der Anmeldung: 05.01.2022
(73) Patentinhaber: B. Strautmann & Söhne GmbH u. Co. KG, 49196 Bad Laer (DE)
(72) Erfinder: Strautmann, Wolfgang, 49196 Bad Laer (DE)
(74) Vertreter: Dr. Träger & Strautmann PAe PartG mbB

(56) Entgegenhaltungen:
- DE-U1-202011 002 316
- DE-U1-202019 104 058
- US-A- 3 323 196
- US-A- 5 042 243

## Beschreibung

Die Erfindung betrifft eine Trommel für eine Aufnahmevorrichtung einer Ernte- oder Aufsammelmaschine umfassend
- einen Trommelmantel mit einer äußeren Mantelfläche und einer inneren Mantelfläche;
- eine Vielzahl von an der Trommel angeordneten, über die äußere Mantelfläche der Trommel abstehenden Förderzinken.

Solche Aufnahmevorrichtungen werden an Erntemaschine, wie Ladewagen, Ballenpresse, Heuwerbemaschine oder Feldhäcksler eingesetzt und dienen zur Aufnahme von auf einer Feld- oder Wiesenfläche liegendem Erntegut und zur Weiterförderung des Ernteguts an eine nachfolgende Erntegut-Bearbeitungseinrichtung. Weiterhin kommen die Aufnahmevorrichtungen auch an Maschine zum Aufsammeln von Abfällen und/oder Stückgut vom Boden, wie Strandreinigungsmaschinen oder Maschinen zur Reinigung von Parkanagen zum Einsatz.

Die Aufnahme und die Förderung des Sammelgutes erfolgt durch die umlaufenden Förderzinken, die am Boden liegendes Erntegut ergreifen und an der Oberseite von Abstreifern entlangführen und es an nachfolgende Bearbeitungseinrichtungen übergeben.

Aus EP 1 980 144 A1 ist eine landwirtschaftliche Erntemaschine mit einer Aufnahmevorrichtung bekannt, bei der quer zur Fahrtrichtung angeordnete Förderzinken versetzt zueinander angeordnet sind. Bei den Förderzinken selbst handelt es sich um aus einem Stahldraht hergestellte Doppelfederzinken, bei denen im Mittelbereich zwischen den Federwindungen eine Befestigungsöse vorgesehen ist, mittels derer die Förderzinken auf der Zinkentrommel mit Schrauben befestigt werden. Um ein Verdrehen der Förderzinken auf der Fördertrommel zu verhindern, ist eine zusätzliche Verdrehsicherung vorgesehen.

Die Befestigung der Förderzinken ist an die speziellen Bedürfnisse bekannter Doppelfederzinken mit Befestigungsöse angepasst und für Förderzinken ohne Befestigungsöse ungeeignet.

Aus DE 20 2016 104 504 U1 ist eine Aufnahmevorrichtung mit einer drehantreibbaren Trommel mit einer Vielzahl von an der Trommel angeordneten, über die Mantelfläche der Trommel abstehenden Förderzinken bekannt. Die Förderzinken sind aus einem elastischen Kunststoff hergestellt und derart auf der Trommel verteilt, dass sie nebeneinanderliegende, voneinander beabstandete, Zinken-Ringe bilden. Zwischen den benachbarten Zinken-Ringen sind Zwischenräume zur Aufnahme von Abstreifern vorgesehen. Die Aufnahme und die Förderung des Erntegutes erfolgt durch die umlaufenden Förderzinken, die das Erntegut an der Oberseite der Abstreifer entlangführen und es an nachfolgende Erntegut-Bearbeitungseinrichtungen übergeben.

Die aus DE 20 2016 104 504 U1 bekannte Aufnahmevorrichtung weist eine kreisrunde Trommel auf. Die Förderzinken bilden im montierten Zustand einen geschlossenen Zinkenring, dessen Innendurchmesser an den Außendurchmesser der Trommel angepasst ist. Die Zinkenringe sind mit Schrauben auf der Trommel befestigt.

Nachteilig an dieser Aufnahmevorrichtung ist, dass die Zinkenringe eine geschlossene Kontur ausbilden, die hinsichtlich der Herstellung und ihrer Montage auf der Trommel relativ aufwendig ist. Weiterhin wird die auf die Förderzinken einwirkende Kraft ausschließlich über die Schraubverbindung auf die Trommel übertragen. Die Anbringung einzelner Zinken unabhängig von deren Integration in einen geschlossenen Zinkenring ist nicht vorgesehen.

Aus DE 20 2019 104 058 U1 ist eine Aufnahmevorrichtung für eine Erntemaschine bekannt, die eine Trommel mit darauf angebrachte Förderzinken umfasst. Die Trommel besteht aus aneinandergereihten Segmenten. Die Segmente weisen ein gekantetes Mantelblech (Teilschalen 21, 21') auf, auf welchem Haltebleche zur Befestigung der Förderzinken 13 angebracht sind. Diese Haltebleche weisen U-förmige, nach außen ragende Vorsprünge auf. Die Vorsprünge sind somit aus dem Halteblech gebildet und nicht aus dem darunter liegenden Mantelblech bzw. den Teilschalen 21, 21'. Nachteilig hieran ist, dass zusätzliche Teile, nämlich die Haltebleche, am Trommelmantel angebracht sind, die das Gewicht der Aufnahmevorrichtung und den Fertigungsaufwand zur Herstellung der Trommel erheblich erhöhen.

Weitere Aufnahmevorrichtungen sind auch aus den Druckschriften US 5 042 243 A oder DE 20 2011 002316 U1 bekannt.

Aufgabe der Erfindung ist es, eine Zinkenbefestigung vorzuschlagen, die im Arbeitseinsatz die auf die Förderzinken einwirkende Last besonders effizient auf die Trommel überträgt und in Herstellung, Montage und Wartung kostengünstig ist.

Diese Aufgabe wird gelöst mit einer Aufnahmevorrichtung mit den Merkmalen des Anspruchs 1.

In den Trommelmantel ist wenigstens ein Konturschnitt eingebracht, der zwei Endpunkte aufweist. Der Konturschnitt und eine die Endpunkte verbindenden Grenzgerade umschließen einen Konturbereich des Trommelmantels. Bei der Grenzgeraden handelt es sich um eine virtuelle Linie, die zur Definition des Konturbereiches herangezogen wird. Der Konturschnitt kann eine grundsätzlich beliebige Form aufweisen, soweit er selbst keine Gerade bildet. Grundsätzlich umschließt jeder von einer Geraden abweichende Konturschnitt gemeinsam mit einer die Endpunkte verbindenden Geraden einen Konturbereich der Mantelfläche.

Erfindungsgemäß ist vorgesehen, dass wenigstens ein Teil des durch den Konturschnitt abgegrenzten Konturbereiches die Mantelfläche nach innen oder außen überragt und ein Stützlager für einen Förderzinken ausbildet. Die innerhalb eines Konturschnitts angeordneten Bereiche sind dementsprechend gegenüber dem übrigen Trommelmantel verformt und bilden Stützlager für die Förderzinken aus. Sie setzen die Kontur des Trommelmantels somit nicht fort, sondern überragen diesen vielmehr nach innen oder außen. Es handelt sich bei den Stützlagern somit um Teilbereiche des Trommelmantels, die entweder in die Trommel eingedrückt oder aus der Trommel herausgedrückt sind. In beiden Fällen ist es möglich, Förderzinken im Bereich des Zinkenfußes mit einer entsprechend angepassten Kontur zu versehen und das Stützlager dann als Halter für den Zinkenfuß zu nutzen. Dadurch, dass die Stützlager die Mantelfläche nach innen oder außen überragen, können sie Anschläge für unmittelbar davor oder dahinter angebrachte Förderzinken ausbilden.

Besonders vorteilhaft ist somit, dass wenigstens ein Stützlager für einen Förderzinken nicht aus einem zusätzlichen Bauteil, beispielsweise einem auf dem Trommelmantel angebrachten Halteblech, gebildet wird, sondern aus einem Teilbereich des Trommelmantels selbst. Als Beispiel sei eine Aufnahmevorrichtung mit sechs Reihen von Förderzinken und jeweils 24 Förderzinken je Reihe genannt. Eine solche Aufnahmevorrichtung umfasst insgesamt 144 Förderzinken. Bei der erfindungsgemäßen Aufnahmevorrichtung wird für die Befestigung jedes Förderzinkens wenigstens ein aus einem Halteblech gebildetes Stützlager durch einen umgeformten Bereich des Trommelmantels ersetzt. Hierdurch ergeben sich signifikante Gewichtseinsparungen. Auch die Fertigung vereinfacht sich, da die zu Stützlagern umzuformenden Bereiche des Trommelmantels mit computergesteuerten Zuschnitt- und Abkantmaschinen sehr kostengünstig herstellbar sind und die Montagezeit zur Anbringung zusätzlicher Haltebleche bei der erfindungsgemäßen Aufnahmevorrichtung gänzlich entfällt.

Im Arbeitseinsatz, bei Rotation der Trommel, werden die Förderzinken somit durch die Stützlager gehalten. Die Stützlager können in Rotationsrichtung der Trommel gesehen vor und/oder hinter den Förderzinken angeordnet sein. In einer bevorzugten Ausführungsform ist die Zinkenhalterung so konzipiert, dass die Stützlager sich bei im Arbeitseinsatz rotierender Trommel hinter den Förderzinken befinden. Höchst vorzugsweise sind in Drehrichtung der Trommel gesehen vor dem Förderzinken zusätzliche demontierbare Zinkenhalter angebracht, die eine Anpresskraft auf den Förderzinken ausüben und den Förderzinken zwischen Zinkenhalter und Stützlager einklemmen. Im Arbeitseinsatz stützen die Förderzinken sich somit zumindest teilweise gegen die Stützlager ab.

Vereinfacht gesagt ersetzen die aus dem Trommelmantel gebildeten Stützlager zusätzliche Halter, die gegebenenfalls erforderlich wären, um die Förderzinken auf andere Art auf dem Trommelmantel zu befestigen. Da die Stützlager Teil des Trommelmantels sind, kann das von der Aufnahmevorrichtung aufzunehmenden Gut leicht und widerstandsarm an ihnen entlanggleiten und wird beispielsweise nicht durch Befestigungsschrauben behindert.

Insbesondere dann, wenn der Trommelmantel als Blechzuschnitt auf einer Blechbearbeitungsmaschine, beispielsweise einer Laser-Schneidanlage, hergestellt wird, lassen sich die Konturschnitte einfach, präzise und kostengünstig in das Mantelblech einbringen. Im Ergebnis zeichnet sich eine Trommel mit aus dem Trommelmantel ausgebildeten Stützlagern durch eine reduzierte Teilanzahl und einen reduzierten Montageaufwand aus.

In einer bevorzugten Ausführungsform weist der in die Trommel eingebrachte Konturschnitt eine V-förmige oder U-förmige Kontur auf. Solche Konturschnitte ergeben eine große Stützfläche und lassen sich als Negativ-Form leicht in die Förderzinken einbringen, so dass eine formschlüssige Verbindung oder Anbindung einfach realisierbar ist.

Alternativ zu einer U-förmigen Kontur oder V-förmigen Kontur können aber auch andere Konturen vorgesehen sein, beispielsweise Konturen auf Basis eines Kreisbogens oder eines nicht geschlossenen Polygonzuges.

Wie weiter oben erläutert, überragen die Stützlager den Trommelmantel nach außen oder innen. Besonders bevorzugt ist eine Ausführung, bei der die Stützlager den Trommelmantel nach außen überragen. Um die Stützlager aus dem Trommelmantel nach außen vorstehen zu lassen, kann im Trommelmantel außerhalb des Konturbereiches eine Abkantung vorgesehen sein, durch welche der Trommelmantel gegenüber dem Konturbereich verformt ist. Durch die Abkantung entstehen somit zwei Teilflächen die sich in unterschiedlichen Ebenen befinden. Die Abkantung ist so gesetzt, dass der innerhalb des Konturschnittes befindliche Konturbereich nicht verformt wird, sondern lediglich der an die Abkantung angrenzende Trommelmantel. Hierdurch verbleibt der Konturbereich in der Ebene einer Teilfläche und der den Konturbereich umgebende Fläche des Trommelmantels, während die den Konturbereich umgebende Teilfläche des Trommelmantels abgewinkelt wird. Im Ergebnis ergibt sich so ein aus der einen Teilfläche vorspringender Fortsatz, der die Trommel überragt und das Stützlager ausbildet. Da das Stützlager oder dessen Grenzlinie keine Verformung erfahren hat, sondern unmittelbar die Kontur des Trommelmantels fortsetzt, wird der Übergangsbereich von Stützlager zu Trommelmantel nicht geschwächt, sondern behält vielmehr seine Ausgangsfestigkeit.

Alternativ dazu ist es auch möglich, dass eine Abkantung innerhalb des Konturbereiches oder an dessen Grenzlinie vorgesehen ist, wobei durch die Abkantung der gesamte Konturbereich oder wenigstens ein Teil des Konturbereiches gegenüber dem Trommelmantel verformt ist. Bei einer solchen Ausführungsform wird also der Konturbereich selbst verformt, so dass er im Ergebnis den Trommelmantel nach innen oder außen überragt. Der besondere Vorteil dieser Lösung liegt darin, dass die Position des Stützlagers frei wählbar ist und die Ausbildung eines Stützlagers die Trommel im Übrigen nicht beeinflusst. Das Herausbiegen oder Hereinbiegen eines Stützlagers aus dem Trommelmantel ist deshalb insbesondere geeignet für runde Trommeln oder für Vieleck-Trommeln, bei denen die Stützlager nicht auf einer Abkantlinie des Trommelmantels angeordnet sind.

Grundsätzlich kann vorgesehen sein, lediglich einzelne Förderzinken oder Förderzinkenringe mit aus dem Mantelblech gebildeten Stützlagern zu halten. Besonders bevorzugt ist jedoch, dass eine Vielzahl von Förderzinken vorzugsweise alle Förderzinken durch wenigstens ein Stützlager gehalten. Insbesondere dann, wenn alle Förderzinken auf gleich Art und Weise an der Trommel angebracht sind, reduziert sich die Anzahl unterschiedlicher Teile. Hierdurch vereinfacht sich die Lagerhaltung und bei etwaigen Wartungsarbeiten können einzelne Zinken problemlos ausgetauscht werden.

Alternativ zu einer Ausführung, bei der die Förderzinken auf ihrer in Rotationsrichtung gesehen einen Seite von einem Stützlager und auf ihrer anderen Seite von einem andersartigen Halter gehalten werden, kann auch vorgesehen sein, dass ein Förderzinken durch zwei Stützlager gehalten wird. In diesem Fall befindet sich somit ein Stützlager vor dem Förderzinken und ein Stützlager hinter dem Förderzinken. Bei einer solchen Ausführungsform werden die Förderzinken vorzugsweise von einer Seite her unter die Stützlager geschoben.

Um die Verbindung von Förderzinken und Stützlager und damit Trommelmantel zusätzlich zu verstärken, kann das hintere Stützlager und/oder das vordere Stützlager mit wenigstens einem Befestigungsmittel, vorzugsweise einer Schraube lösbar mit dem Förderzinken verbunden sein. Durch das zusätzliche Befestigungsmittel kann zum einen die Klemmkraft erhöht werden und zum anderen eine Verdrehsicherung ausgebildet werden, die ein seitliche Ausbrechen des Förderzinkens aus der Halterung bei etwaig auftretenden Querkräften verhindert.

Die Trommel kann eine runde Kontur oder eine Vieleck-Kontur aufweisen. Bei der Vieleck-Kontur kann es sich um ein regelmäßiges Polygon handeln, bei dem alle Seiten gleich lang und alle Innenwinkel gleich groß sind. Es kann aber auch vorgesehen sein, dass es sich nur um ein im Wesentlichen regelmäßiges Polygon handelt. Unter einem im Wesentlichen regelmäßigen Polygon wird ein Polygon verstanden, bei dem die Flächen zwischen zwei benachbarten Kanten nicht aus einer einzigen Fläche, sondern aus zwei Flächen gebildet werden, die mit einem Innenwinkel von 170° bis 180° zueinander angeordnet sind. Hierdurch ergeben sich Vorteile bei der Befestigung der Zinkenhalter, wie weiter unten noch näher erläutert werden wird.

Grundsätzlich ist die vorgeschlagene Zinkenbefestigung somit universell für runde und eckige Trommeln einsetzbar. Vorzugsweise sind die Förderzinken unmittelbar auf der äußeren Mantelfläche der Trommel angebracht und die Kontaktfläche des Zinkenfußes ist an die Kontur der Trommel angepasst. Bei einer runden Trommel weist der Zinkenfuß somit eine gerundete Kontaktfläche auf, bei einer Vieleckkontur ist die Kontaktfläche flach und der Förderzinken ist flach auf eine ebenfalls flache Teilfläche der Trommel aufsetzbar. Ein Vorteil einer Vieleck-Trommel liegt insbesondere darin, dass sie aus einem flachen Ausgangsmaterial, insbesondere einem flachen Stahlblech, herstellbar ist und sich etwaige, in die Trommel einzubringende, Bohrungen und Ausschnitte einfach und mit hoher Genauigkeit mit entsprechenden Bearbeitungsmaschinen in das Blech einarbeiten lassen. Beim nachfolgenden Kanten entsteht, anders als beim Rundwalzen, kein Verzug in den eingebrachten Bohrungen und Ausschnitten.

Vorzugsweise weist das Stützlager eine Kontur auf, welche an eine an den Förderzinken vorgesehene Kontur angepasst ist, so dass das Stützlager mit den Förderzinken wenigstens teilweise formschlüssig verbindbar ist.

Bei den Förderzinken, die vorzugsweise aus einem elastischen Kunststoff hergestellt sind, kann es sich um Einzelzinken oder um Mehrfachzinken, insbesondere um sogenannte Doppelzinken, handeln. Doppelzinken weisen zwei Zinkenspitzen auf. Die Förderzinken können sich unter Lasteinwirkung verformen und nehmen nach Beendigung der Lasteinwirkung wieder ihre ursprüngliche Form an.

Der Zinkenfuß der Förderzinken umfasst wenigstens eine an die Stützlager und/oder die Zinkenhalter und/oder die Haltebleche angepasste Kontur zur Ausbildung einer Verdrehsicherung. Die Förderzinken sind entweder ausschließlich mit den beschriebenen Stützlagern oder mit Stützlagern und Zinkenhaltern auf der Trommel befestigt. Bei der Befestigung handelt es sich vorzugsweise um eine Klemmverbindung Die insofern vorgesehenen Befestigungselemente sind vor und/oder hinter dem Förderzinken angeordnet. Sie üben eine Anpresskraft auf den Zinkenfuß aus und blockieren gleichzeitig eine Bewegung des Zinkens auf der Trommel in radialer Richtung. Da vom Erntegut unter ungünstigen Bedingungen auch Seitenkräfte auf die Förderzinken einwirken können, können die Förderzinken dann, wenn die Seitenkraft größer als die Klemmkraft ist, zur Seite hin aus der Klemmverbindung ausbrechen. Um ein solches seitliches Ausbrechen zu verhindern, umfasst die Klemmverbindung vorzugweise einen formschlüssigen Bereich in dem sich der Förderzinken gegen die zur Befestigung vorgesehenen Elemente abstützt.

Besonders bevorzugt ist, dass der Förderzinken selbst wenigstens eine, vorzugsweise U-förmige, Kontur umfasst, die an die Kontur des Befestigungselements angepasst ist. Bei Einwirken einer Seitenkraft auf den Förderzinken wird der Förderzinken somit nicht nur durch die Klemmkraft gehalten, der Förderzinken stützt sich vielmehr zur Seite hin mechanisch gegen das Befestigungsmittel ab. Das Befestigungsmittel bildet somit eine zusätzliche Verdrehsicherung aus, die ein seitliches Ausbrechen des Förderzinkens verhindert.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt eine einstückige Trommel für eine Ernte- oder Aufsammelmaschine mit aufmontierten Förderzinken;
- Fig. 2: zeigt die Trommel aus Fig. 1 ohne Förderzinken;
- Fig. 3: zeigt einen Ausschnitt aus Fig. 2.
- Fig. 4: zeigt einen Teilbereich einer Trommel mit Förderzinken, die einen Zinkenring ausbildenden;
- Fig. 5: zeigt einen Schnitt durch den Zinkenring gemäß Fig. 4;
- Fig. 6: zeigt einen Ausschnitt aus Fig. 5;
- Fig. 7: zeigt ein Halteblech für einen Förderzinken in einer perspektivischen Ansicht;
- Fig. 8: zeigt den Halter gemäß Fig. 7 in einer Ansicht von vorne
- Fig. 9: zeigt einen Förderzinken in einer Ansicht von schräg vorne;
- Fig. 10: zeigt einen Förderzinken in einer Ansicht von schräg hinten.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten.

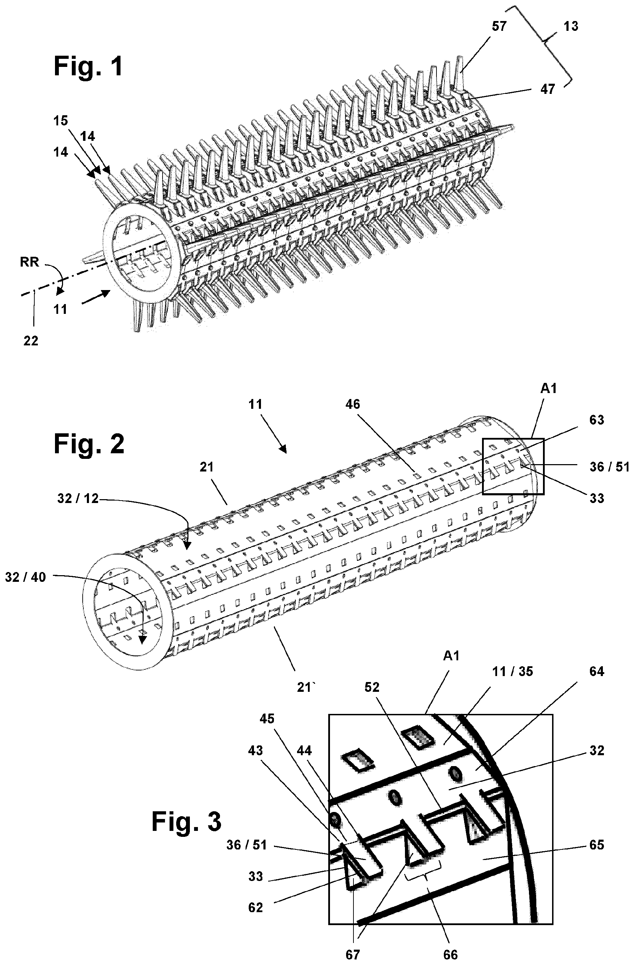

Fig. 1 zeigt eine einstückig ausgebildete Trommel 11 für eine Ernte- oder Aufsammelmaschine mit aufmontierten Förderzinken 13. Die Förderzinken 13 umfassen einen Zinkenfuß 47 und einen Einzelzinken 57. Jeweils sechs Zinken 13 sind in Rotationsrichtung RR hintereinander angeordnet und bilden jeweils einen Zinkenring 14. Zwischen den Zinkenringen 14 befindet sich jeweils ein Zwischenraum 15, der für in Fig. 1 nicht dargestellte Abstreifer vorgesehen ist.

Fig. 2. Zeigt die Trommel 11 gemäß Fig. 1 ohne Förderzinken. Die Trommel 11 ist in diesem Ausführungsbeispiel aus zwei Teilschalen 21, 21' hergestellt, die, in Längsrichtung der Trommel 11 gesehen, ein einziges Segment ausbilden und aus Blechzuschnitten hergestellt sind. Im dargestellten Beispiel sind in die Blechzuschnitte zunächst Bohrungen 63, Aussparungen 46 und Konturschnitte 33 eingebracht worden. Die Konturschnitte 33 sind im dargestellten Ausführungsbeispiel U-förmig ausgeführt und umgeben ebenfalls U-förmige Konturbereiche 51. Die Blechzuschnitte sind durch Abkanten zu einer Vieleck-Kontur 35 umgeformt. Gemeinsam ergeben die gekanteten Teilschalen 21, 21' eine Vieleck-Kontur 35 in Form eines unregelmäßigen Polygons.

Die Trommel 11 umfasst einen Trommelmantel 32 mit einer inneren Mantelfläche 40 und einer äußeren Mantelfläche 12.

Fig. 3 zeigt einen Ausschnitt aus Fig. 2. Die in den Trommelmantel 32 eingebrachten Konturschnitte 33 reichen von einem ersten Endpunkt 43 bis zu einem zweiten Endpunkt 44. Der von einem Konturschnitt 33 umgebender Konturbereich 51 reicht bis zu einer virtuellen Grenzgerade 45, die durch eine Verbindung der beiden Endpunkte 43 und 44 definiert ist. Im dargestellten Ausführungsbeispiel ist der Konturschnitt 33 U-förmig. Dementsprechend weist auch der durch den Konturschnitt 33 eingeschlossene Konturbereich 51 und damit ein aus dem Konturbereich 51 ausgebildetes Stützlager 36 eine Kontur 62 auf, die ebenfalls U-förmig ist. Im dargestellten Ausführungsbeispiel überragen die Stützlager 36 den Trommelmantel 32 nach außen. Dadurch, dass der Konturbereich 51 gegenüber einem den Konturbereich 51 umgebenden Umgebungsbereich 66 verformt ist, ergibt sich im Trommelmantel 32 eine Aussparung 67 (vgl. Fig. 3). Bei dem in Figur 3 dargestellten Ausführungsbeispiel ist der das Stützlager 36 bildende Konturbereich 51 somit vereinfacht gesagt aus dem Trommelmantel 32 nach außen weisend herausgebogen. Das Stützlager 36 für einen Förderzinken 13 wird somit nicht aus einem zusätzliches am oder auf dem Trommelmantel 32 angebrachtes Bauteil gebildet, sondern aus einem Teilbereich des Trommelmantels 32, nämlich dem Konturbereich 51.

Die Vieleck-Kontur 35 der Trommel 11 wird durch in den Trommelmantel 32 eingebrachte Abkantungen hergestellt. Wie Figur 3 zeigt ist unter anderem eine Abkantung 52 vorgesehen, die im Bereich der Grenzgeraden 45 angeordnet ist. Durch die Abkantung 52 wird der Trommelmantel 32 in Teilflächen 64 und 65 unterteilt, die sich in unterschiedlichen Ebenen befinden. Die Abkantung 52 umfasst eine Vielzahl von Teilstrecken, die sich jeweils zwischen zwei benachbarten Konturschnitten 33 befinden. Die Abkantung 52 verformt somit den Trommelmantel 32 über seine gesamte Breite, nicht aber die innerhalb der Konturschnitte 33 liegenden Konturbereiche 51. Dementsprechend verbleiben die Konturbereiche 51 auch nach dem Abkanten in der Ebene der Teilfläche 64 und überragen die Teilfläche 65 des Trommelmantels 32 nach außen hin. Im Ergebnis bilden die Konturbereiche 51 die Stützlager 36 aus, gegen die sich im montierten Zustand die Förderzinken 13 abstützen.

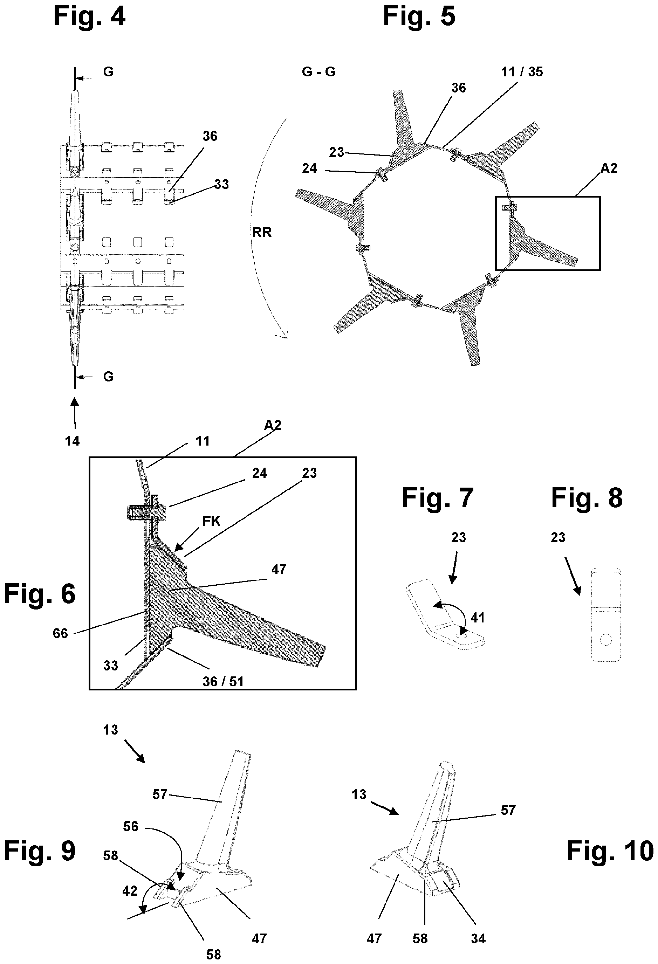

Die Figuren 9 und 10 zeigen den Förderzinken 13 im Detail. Der Zinkenfuß 47 umfasst in seinem vorderen Bereich eine U-förmige Kontur 56, die durch zwei vorstehende Stege 58 ausgebildet ist. Analog dazu ist im hinteren Bereich des Förderzinkens 13 ebenfalls eine U-förmige Kontur 34 vorgesehen.

Die Figuren 4 bis 6 zeigen ein Ausführungsbeispiel zur Befestigung der Förderzinken 13 auf der Trommel 11. Die Förderzinken 13 werden durch die Stützlager 36 und demontierbare Haltebleche 23 (vgl. Fig. 7 und 8) fixiert. Das Halteblech 23 umfasst eine Abkantung und weist einen Winkel (41) auf, der geringfügig größer ist als der an einer Kontur 56 des Zinkenfußes 47 vorgesehener Winkel 42. Beim Festdrehen der Schraube drückt das Klemmteil des Halteblechs 23 somit auf den Zinkenfuß 47 und übt dort eine Klemmkraft FK aus.

Im montierten Zustand greifen die Haltebleche 23 und die Stützlager 36 in die U-förmigen Konturen 34, 56 ein und klemmen den Förderzinken 13 fest. Stege 58 und Haltebleche 23 bzw. Stützlager 36 bilden miteinander formschlüssige Verbindungen. Hat eine im Arbeitseinsatz auf die Förderzinken 13 einwirkenden Kraft eine Seitenkomponente, verhindern die Stege 58 ein seitliches Ausbrechen der Förderzinken 13 und bilden somit eine Verdrehsicherung aus.

Alternativ zu der im abgebildeten Ausführungsbeispiel dargestellten Ausführungsform kann das Stützlager 36 auch - in Rotationsrichtung RR gesehen - vor dem Förderzinken 13 und das Halteblech 23 hinter dem Förderzinken 13 angebracht sein. Weiterhin ist es möglich den Förderzinken 13 sowohl nach vorn als auch nach hinten durch ein Stützlager 36 zu halten und auf die Haltebleche 23 komplett zu verzichten. Da die Stützlager 36 jedoch starr aus dem Trommelmantel 32 hervorragen und die Förderzinken 13 von der Seite her unter die Stützlager 36 geschoben werden, können bei einer solchen Ausführungsform zusätzliche Sicherungselement, beispielsweise Schrauben, vorgesehen sein, die Förderzinken 13 auf der Trommel 11 fixieren. Beispielsweise können in den Stützlagern 36 Bohrungen vorgesehen sein, durch die hindurch die Schrauben in den Zinkenfuß 47 eingedreht werden.

### Bezugszeichenliste

- 10: -
- 11: Trommel
- 12: äußere Mantelfläche (von 32)
- 13: Förderzinken
- 14: Zinken-Ring
- 15: Zwischenraum
- 16: -
- 17: -
- 18: -
- 19: -
- 20: -
- 21,: 21' Teilschale
- 22: Drehachse
- 23: Halteblech
- 24: Schraube
- 25: -
- 26: -
- 27: -
- 28: -
- 29: -
- 30: -
- 31: -
- 32: Trommelmantel
- 33: Konturschnitt
- 34: Kontur (von 47)
- 35: Vieleck-Kontur (von 11)
- 36: Stützlager
- 37: -
- 38: -
- 39: -
- 40: innere Mantelfläche (von 32)
- 41: Winkel (von 23)
- 42: Winkel (von 13)
- 43: Endpunkt (von 32)
- 44: Endpunkt (von 32)
- 45: Grenzlinie(virtuell)
- 46: Aussparung
- 47: Zinkenfuß
- 48: -
- 49: -
- 50: -
- 51: Konturbereich
- 52: Abkantung
- 53: -
- 54: -
- 55: -
- 56: Kontur (von 47)
- 57: Einzelzinken
- 58: Steg
- 59: -
- 60: -
- 61: -
- 62: Kontur (von 36)
- 63: Bohrung
- 64: Teilfläche (von 32)
- 65: Teilfläche (von 32)
- 66: Umgebungsbereich (von 51)
- 67: Aussparung (in 32)

- A1: Ausschnitt
- A2: Ausschnitt
- G-G: Schnitt
- FK: Klemmkraft
- RR: Drehrichtung (von 11)

## Patentansprüche

1. Trommel (11) für eine Aufnahmevorrichtung einer Ernte- oder Aufsammelmaschine umfassend
- einen Trommelmantel (32) mit einer äußeren Mantelfläche (12) und einer inneren Mantelfläche (40);
- eine Vielzahl von an der Trommel (11) angeordneten, über die äußere Mantelfläche (12) der Trommel (11) abstehenden Förderzinken (13),
**dadurch gekennzeichnet, dass**
- in den Trommelmantel (32) wenigstens ein Konturschnitt (33) eingebracht ist, der zwei Endpunkte (43, 44) aufweist
- von dem Konturschnitt (33) und einer die Endpunkte (43, 44) verbindenden Grenzlinie (45) ein Konturbereich (51) umschlossen ist,
- wenigstens ein Teil des Konturbereiches (51) gegenüber einem den Konturbereich (51) umgebenden Umgebungsbereich (66) des Trommelmantels (32) umgeformt ist und die Mantelfläche (12) nach innen oder außen überragt und ein Stützlager (36) für einen Förderzinken (13) ausbildet.

2. Trommel (11) nach Anspruch 1, **dadurch gekennzeichnet, dass** der Konturschnitt (33) eine V-förmige oder U-förmige Kontur aufweist.

3. Trommel (11) nach Anspruch 1 oder 2, **dadurch gekennzeichnet, dass** im Trommelmantel (32) außerhalb des Konturbereiches (51) eine Abkantung (52) vorgesehen ist, durch welche der Trommelmantel (32) gegenüber dem Konturbereich (51) verformt ist.

4. Trommel (11) nach Anspruch 1 oder 2, **dadurch gekennzeichnet, dass** innerhalb des Konturbereiches (51) oder an der Grenzlinie (45) eine Abkantung (52) vorgesehen ist, durch welche wenigstens ein Teil des Konturbereiches (51) gegenüber dem Trommelmantel verformt ist.

5. Trommel (11) nach einem der Ansprüche 1 bis 4, **dadurch gekennzeichnet, dass** eine Vielzahl von Förderzinken (13), vorzugsweise alle Förderzinken (13) durch wenigstens ein Stützlager (36) gehalten werden.

6. Trommel (11) nach einem der Ansprüche 1 bis 5, **dadurch gekennzeichnet, dass** je Förderzinken ein in Rotationsrichtung (RR) gesehenes hinteres Stützlager (36) und ein vorderes Stützlager vorgesehen ist.

7. Trommel (11) nach einem der Ansprüche 1 bis 6, **dadurch gekennzeichnet, dass** das hintere Stützlager (36) und/oder das vordere Stützlager mit wenigstens einem Befestigungsmittel, vorzugsweise einer Schraube lösbar mit dem Förderzinken (13) verbunden ist.

8. Trommel (11) nach einem der Ansprüche 1 bis 7, **dadurch gekennzeichnet, dass** die Trommel (11) eine runde Kontur oder eine Vieleck-Kontur (35) aufweist.

9. Trommel (11) nach einem der Ansprüche 1 bis 8, **dadurch gekennzeichnet, dass** das Stützlager (36) eine Kontur (62) aufweist, welche an eine an den Förderzinken (13) vorgesehene Kontur (34, 56) angepasst ist, so dass Stützlager (36) mit den Förderzinken (13) wenigstens teilweise formschlüssig verbindbar sind.

## Claims

1. A drum (11) for a pick-up device of a harvesting or gathering machine comprising
- a drum shell (32) having an outer shell surface (12) and an inner shell surface (40);
- a plurality of conveyor tines (13) disposed on the drum (11) and projecting beyond the outer shell surface (12) of the drum (11),
**characterised in that**
- at least one contour cut (33) is made in the drum shell (32), which has two end points (43, 44)
- a contour region (51) is enclosed by the contour cut (33) and a boundary line (45) connecting the end points (43, 44),
- at least a part of the contour region (51) is deformed relative to a surrounding region (66) of the drum shell (32) surrounding the contour region (51) and projects inwards or outwards beyond the shell surface (12) and forms a support bearing (36) for a conveyor tine (13).

2. Drum (11) according to claim 1, **characterised in that** the contour cut (33) has a V-shaped or U-shaped contour.

3. Drum (11) according to claim 1 or 2, **characterised in that** a bend (52) is provided in the drum shell (32) outside the contour region (51), by means of which the drum shell (32) is deformed relative to the contour region (51).

4. Drum (11) according to claim 1 or 2, **characterised in that** a bend (52) is provided inside the contour region (51) or at the boundary line (45), by means of which at least a part of the contour region (51) is deformed relative to the drum shell.

5. Drum (11) according to one of claims 1 to 4, **characterised in that** a plurality of conveyor tines (13), preferably all conveyor tines (13), are held by at least one support bearing (36).

6. Drum (11) according to one of claims 1 to 5, **characterised in that** a rear support bearing (36) viewed in the direction of rotation (RR) and a front support bearing are provided for each conveyor tine.

7. Drum (11) according to one of claims 1 to 6, **characterised in that** the rear support bearing (36) and/or the front support bearing is detachably connected to the conveyor tine (13) by at least one fastening means, preferably a screw.

8. Drum (11) according to one of claims 1 to 7, **characterised in that** the drum (11) has a round contour or a polygonal contour (35).

9. Drum (11) according to one of claims 1 to 8, **characterised in that** the support bearing (36) has a contour (62) which is adapted to a contour (34, 56) provided on the conveyor tines (13), so that support bearings (36) can be connected to the conveyor tines (13) at least partially in a form-fitting manner.

## Revendications

1. Tambour (11) pour un dispositif de ramassage d'une machine de récolte ou de ramassage comprenant
- une enveloppe de tambour (32) avec une surface d'enveloppe extérieure (12) et une surface d'enveloppe intérieure (40) ;
- une pluralité de dents de transport (13) disposées sur le tambour (11) et dépassant de la surface d'enveloppe extérieure (12) du tambour (11),
**caractérisé en ce que**
- dans l'enveloppe du tambour (32) est pratiquée au moins une découpe de contour (33) qui présente deux points d'extrémité (43, 44)
- une zone de contour (51) est entourée par la découpe de contour (33) et une ligne limite (45) reliant les points d'extrémité (43, 44),
- au moins une partie de la zone de contour (51) est déformée par rapport à une zone environnante (66) de l'enveloppe de tambour (32) entourant la zone de contour (51) et dépasse la surface d'enveloppe (12) vers l'intérieur ou l'extérieur et forme un palier de support (36) pour une dent de transport (13).

2. Tambour (11) selon la revendication 1, **caractérisé en ce que** la découpe du contour (33) présente un contour en forme de V ou de U.

3. Tambour (11) selon la revendication 1 ou 2, **caractérisé en ce qu'**il est prévu dans l'enveloppe du tambour (32), à l'extérieur de la zone de contour (51), un pliage (52) par lequel l'enveloppe du tambour (32) est déformée par rapport à la zone de contour (51).

4. Tambour (11) selon la revendication 1 ou 2, **caractérisé en ce qu'**un pliage (52) est prévu à l'intérieur de la zone de contour (51) ou sur la ligne limite (45), par lequel au moins une partie de la zone de contour (51) est déformée par rapport à l'enveloppe du tambour.

5. Tambour (11) selon l'une des revendications 1 à 4, **caractérisé en ce qu'**une pluralité de dents de transport (13), de préférence toutes les dents de transport (13), sont maintenues par au moins un palier de support (36).

6. Tambour (11) selon l'une des revendications 1 à 5, **caractérisé en ce que**, pour chaque dent de transport, il est prévu un palier d'appui arrière (36), vu dans le sens de rotation (RR), et un palier d'appui avant.

7. Tambour (11) selon l'une des revendications 1 à 6, **caractérisé en ce que** le palier d'appui arrière (36) et/ou le palier d'appui avant est relié de manière amovible à la dent de transport (13) par au moins un moyen de fixation, de préférence une vis.

8. Tambour (11) selon l'une des revendications 1 à 7, **caractérisé en ce que** le tambour (11) présente un contour rond ou un contour polygonal (35).

9. Tambour (11) selon l'une des revendications 1 à 8, **caractérisé en ce que** le palier d'appui (36) présente un contour (62) qui est adapté à un contour (34, 56) prévu sur les dents de transport (13), de sorte que les paliers d'appui (36) peuvent être reliés au moins partiellement par complémentarité de forme avec les dents de transport (13).
